# EUROPEAN PATENT APPLICATION

(11) **EP 4 534 267 A1**
(43) Date of publication of application: **09.04.2025**
(21) Application number: 23202021.4
(22) Date of filing: 06.10.2023
(51) Int. Cl.: B29B 11/16, B29C 70/42, B29C 70/88, B29D 99/00

(54) **FIBER PREFORM FOR MANUFACTURING A FIBER COMPOSITE COMPONENT OF A WIND TURBINE ROTOR BLADE, METHOD AND WIND TURBINE ROTOR BLADE**

(71) Applicant: Nordex Energy SE & Co. KG, 22419 Hamburg (DE); Nordex Energy Brasil - Comércio E Indústria De Equipamentos Ltda., 04547-005 Sao Paulo (BR)
(72) Inventor: Machalica, Stefan, 22419 Hamburg (DE); Pospischil, Lars, 22419 Hamburg (DE); De Sousa, Lazaro, 04547-005 Sao Paulo (BR); Griesel, Markus, 22419 Hamburg (DE)
(74) Representative: Völkl Siebenson Patentanwälte - Partnerschaft mbB

(57) **Abstract**

The invention concerns a fiber preform (140) for manufacturing a fiber composite component of a wind turbine rotor blade (110), wherein
- the preform (140) comprises a plurality of fabric layers (142), the fabric layers (142) being arranged on top of each other to form a stack (144),
- each fabric layer (142) comprises dry fiber material,
- at least one layer of the plurality of fabric layers (142) is formed as a stiffening layer (146),
- the stiffening layer (146) comprises several stiffening rods (152), and
- the stiffening rods (152) are held on the stiffening layer (146) via several dry retaining fiber rovings (156).

The invention further concerns a method of manufacturing and a wind turbine rotor blade.

## Description

The invention relates to a fiber preform for manufacturing a fiber composite component of a wind turbine rotor blade. The invention also relates to a method of manufacturing a wind turbine rotor blade as well as to a wind turbine rotor blade.

Wind power provides a clean and environmentally friendly source of energy. Wind turbine rotor blades capture kinetic energy of wind using known airfoil principles. Wind turbine rotor blades are typically made of fiber-reinforced composite materials such as carbon or glass fibers in a polymer or epoxy resin.

To manufacture a rotor blade or components thereof, typically layers of fiber material are laid individually or stacked into an appropriately shaped, particularly curved mould. Load bearing sections such as the spars and reinforcing sections may also be placed into the mould. After that, the fiber layers are infused by resin and cured to manufacture the final product. A mould for a single wind turbine rotor blade typically comprises two mould halves, each corresponding to one half shell of the blade from root to tip and from leading edge to trailing edge. Each half shell of the blade is separately fabricated and once completed the two half shells are brought together and joined.

The production of a rotor blade or its fiber composite components, e.g. a shell half, is a complicated process, requiring the assembly of a number of different materials and components within a large blade mould within a limited period of time. Typically, placing the layers of fiber material into the mould prior to the final resin infusion and curing process is time-consuming and requires a lot of manual work. In addition, for example when manufacturing a rotor blade root section, the layers of fiber material may suffer from poor drapability, i.e. insufficient ability to conform to the surface of the curved mould. This often results in the formation of wrinkles and other defects, e.g. due to gravity, which negatively impact the quality of the wind turbine blade.

It is an object of the present invention to provide a preform that contributes to a reliable and efficient process for manufacturing a fiber composite component of a wind turbine rotor blade.

According to a first aspect a fiber preform for manufacturing a fiber composite component of a wind turbine rotor blade is disclosed. The preform comprises a plurality of fabric layers, the fabric layers being arranged on top of each other to form a stack. Each fabric layer comprises dry fiber material. At least one layer of the plurality of fabric layers is formed as a stiffening layer. The stiffening layer comprises several stiffening rods. The stiffening rods are held on the stiffening layer via several dry retaining fiber rovings.

The disclosed preform prevents or at least reduces the above disadvantages. In particular, by having a stiffening layer comprised in the stack of fabric layers, slipping, sagging or buckling of the fabric layers in the mould due to gravity can be effectively avoided. The disclosed preform contributes to a form stable stack of fabric layers; these fabric layers remain in their intended position and shape after being placed in a respective curved mould. In other words, once the preform is placed in the mold, the stack of fabric layers has enough stiffness to prevent slipping, sagging or the like. Once more, in other words, the preform has an overall stiffness such that the preform is self-supporting when being laid onto a curved mould surface. This positively impacts the time needed to place the fabric layers in the mould. For example, the placement will be comparatively faster, since the stacks of fabric layers do not need to be fixed with additional measures, e.g. with a spray or holding strips. Particularly, the use of additional tackifier can be avoided. Thus, costs for material and manpower can be significantly reduced. Further, the preform enables the fiber orientation of the stack according to given requirements to be maintained after it is placed into the mould. This contributes to a particularly good quality of the manufactured fiber composite component.

The stiffening layer is a flat integrally formed unit having a higher resistance against buckling and deformation in the stiffened direction that can be laid as a whole, for example on top of the other fabrics, between them or underneath them. Like the other layers, the stiffening layer is a sheet-like, thin structure.

The stack of fabric layers is held together, e.g. by stitching the plurality of fabric layers together. This contributes to the placement of the preform as a whole into the mould.

The stack of fabric layers of the preform, for example, comprises at least five fabric layers or at least ten layers, e.g. 10 to 30 layers. The fabric layers are each preferably fiber layers, such as fiber fabrics. The fabric layers are, for example, made of glass fibers or carbon fibers. Thus, the fabric layers are glass fiber fabric layers or carbon fiber fabric layers. Each fabric layer may be formed from one, two, or more mats of fiber rovings, each fiber rovings essentially being arranged parallel to the other. In the case of a fabric in which all the mats have essentially the same fiber roving orientation, i.e. in each mat the very predominant part of the fiber rovings, e.g. 95% of the fiber rovings or more, has the same orientation, the fabric is said to be unidirectional (short: UD). If it has mats of fiber rovings with two different fiber orientations, it is a biaxial fabric (short: biax). If it has mats with three orientations, it is a triaxial fabric (short: triax). If it has mats with more than three orientations, it is a multiaxial fabric (short: multiax). Typically, a unidirectional fabric has one fiber mat, a biaxial fabric has two fiber mats, and a multiaxial fabric has three or more fiber mats.

The fiber material means for example fibers, e.g. glass or carbon fibers. The fibers may be filaments, yarns, i.e. twisted and/or twisted filament bundles, or rovings, i.e. untwisted bundles of continuous filaments combined in an approximately parallel manner. Due to the use of parallel filaments, rovings have the advantage of particularly good reinforcing properties and a high fiber volume content.

It is noted that all fabric layers of the preform are not necessarily the same. Combinations of different fabric layers are possible, e.g. some UD and some biax fabric layers.

As an advantage of the present disclosure, standard fabric layers as described above are used for the preform, wherein one of the standard fabric layers is made as a stiffening layer.

According to the invention, the stiffening layer comprises several stiffening rods. The stiffening rods are part of a standard fabric layer as described above. The layer has a comparable thickness and dimensions and similar or the same properties in the load direction. A stiffening rod essentially comprises a round cross-section. Alternatively, the stiffening rod can have an oval or flat shape, which reduces the structural impact. The stiffening layer, including the stiffening rods, is prefabricated and integrated into the preform as a single, separate layer. Thus, no single, separate stiffening elements, e.g. stripes or bands, need to be provided into the stack, in particular after the stack has been built. In other words, a standard fabric layer as defined above is topped up with the stiffening rods to form a single fabric layer, which is stiff enough to provide the above-mentioned functions and advantages. The rods provide for sufficient stability, enable an easy handling of the stiffening layer and allow for an easy formation of the stack. Generally, the amount of rods, the distance between adjacent rods, the thickness of the rods and/or the material of the rods added to the stiffening fabric layer can vary and be adapted to design or process requirements for manufacturing the fiber composite component like the blade half shell.

According to the invention, the stiffening rods are held on the stiffening layer via several dry retaining fiber rovings.

Preferably, the stiffening rods are woven with the stiffening layer. Thus, the rods are tightly connected on the stiffening layer. Weaving the rods to the fabric is advantageous, in particular compared to stitching or sewing, since the thin rods could be damaged or destroyed in a stitching/sewing process by a needle. In other words, the rods themselves are not stitched or sewn to the fabric.

According to an embodiment, each stiffening rod has a thickness of 1,5 mm or less. Thus, very thin and easy to handle rods are provided.

According to an embodiment, the stiffening layer is arranged at the bottom side and/or top side of the stack. Thus, the stiffening layer is not between one or more other fabric layers, but is the bottom or top layer of the stack. This provides for more flexibility in forming the preform, for example, in contrast to single stiffening elements like bands or stripes, which would need to be brought between at least two layers.

According to an embodiment, the stiffening layer is arranged between two fabric layers of the plurality of fabric layers. Thus, the stiffening layer is embedded between other fabric layers and is thus, for example, protected until the final resin infusion and curing process.

According to an embodiment, the fiber preform has a length corresponding to a chordwise direction and a width corresponding to a spanwise direction, and wherein the stiffening rods run along the chordwise direction. Thus, in a state where the preform is placed onto the curved mould surface, the rods ideally stabilize the preform along the chordwise direction.

According to an embodiment, two adjacent stiffening rods are arranged in parallel to each other, in particular are spaced apart from each other by 40 to 100 mm, preferably 50 mm. The stiffness of the stiffening layer can be tailored by the diameter of the stiffening rods and/or by the distance between the stiffening rods. Preferred, the diameter of the stiffening rods is as small as possible and the stiffness of the layer is adjusted by the distance of the stiffening rods. This contributes to the above functions and advantages. In particular, this contributes to a reasonable amount of rods used in a preform, wherein sufficient stability is guaranteed.

According to an embodiment, the stiffening rods are an integral part of the stiffening layer. This contributes to the above functions and advantages.

According to an embodiment, the stiffening rods are held on the stiffening layer via several dry retaining fiber rovings. Thus, essentially same material is used that the fabric is made of for holding the rods. The retaining fiber rovings are stitched or sewn with fabric layer. Thus, no additional elements or measures for connecting the rods to the fabric like adhesive or any threads for tying or twisting are necessary. Furthermore, the retaining fiber rovings themselves contribute to an overall strength and stiffness of the component in the final manufactured state, since the additional fiber rovings can run in another direction, which is different from the directions of the main fiber rovings of the fabric.

According to an embodiment, the dry retaining fiber rovings run inclined with respect to the stiffening rods. The inclination of the retaining fiber rovings contributes to safely hold the rods to the fabric. For example, the retaining fiber rovings run at a + 45° and/or - 45 ° angle to the stiffening rods, however, other angles are possible. Preferably, the retaining fiber rovings run in a direction which is different from already existing fiber directions of the fabric layer. In particular, the main fiber rovings run essentially along the spanwise extension plane of the fabric layer.

An exemplary embodiment of the stiffening layer is a standard 0° unidirectional fabric layer. The stiffening rods run in a 90° direction. The retaining fiber rovings run at 45° and hold the rods in a woven manner on the fabric. In the preform, the stack of layers is sewed or stitched together, wherein the direction of sewing or stitching runs parallel to the rods, for example. Of course, instead of the 0° unidirectional fabric layer other standard fabrics like biax or triax fabric layers can be used as already indicated above.

According to an embodiment, each stiffening rod is a pultruded roving. Thus, a very thin and sufficiently rigid element is provided, which enables the above functions and advantages in a preferred way.

According to an embodiment, the plurality of fabric layers is fixedly connected to each other, e.g. by sewing or stitching.

According to a second aspect, a method of manufacturing a fiber composite component of a wind turbine rotor blade is disclosed, the method comprising the steps:
- providing a mould with a curved mould surface,
- providing a fiber preform according to the first aspect or any embodiment as described above,
- laying the preform into the mould onto the curved mould surface, wherein - due to the stiffening layer of the preform
- the preform is self-supporting so that the preform does not buckle in the laid state, and
- resin infusing of the preform and curing the resin to manufacture the fiber composite component of the wind turbine rotor blade.

The method enables the above-mentioned functions and advantages. The above description including the above embodiments apply analogously to the method.

According to a third aspect, a wind turbine rotor blade comprising a half shell is disclosed. The half shell comprises at least one fiber preform according to any one of the above-described embodiments.

The wind turbine rotor blade enables the above-mentioned functions and advantages. The above description including the above embodiments apply analogously to the method.

In the wind turbine rotor blade, the preform is cured as described above, such that all the fabric layers are interconnected by the cured resin.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a segmented rotor blade with two rotor blade segments,
Figure 3 shows a half shell of a wind turbine rotor blade,
Figure 4 shows a mould half for manufacturing a wind turbine rotor blade,
Figure 5 shows a preform according to an embodiment of the invention,
Figure 6 shows a stiffening layer of the preform according to the embodiment of the invention,
Figure 7 shows a stiffening layer of the preform according to another embodiment of the invention, and
Figure 8 shows a schematic flow diagram of a method of manufacturing a fiber composite component of a wind turbine rotor blade according to an embodiment of the invention.

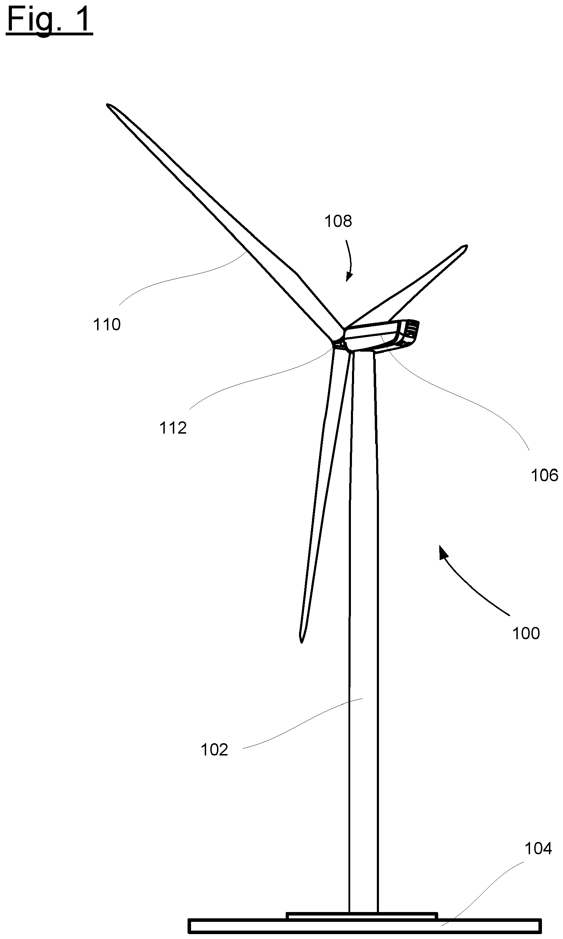

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted.

The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

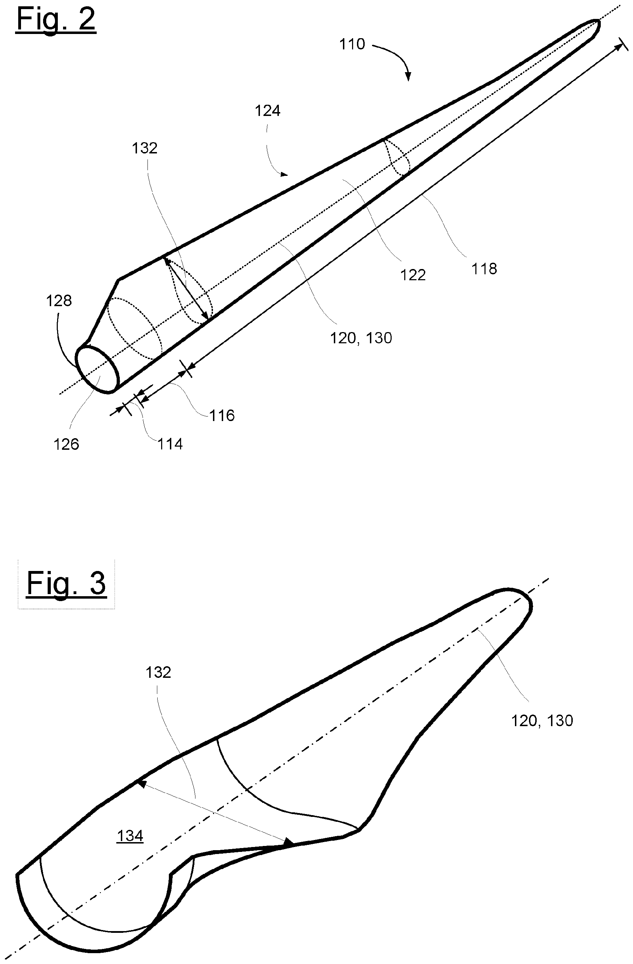

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 with respect to a longitudinal direction 120 (also main extension direction). The rotor blade 110 is essentially hollow inside. The longitudinal direction 120 can also be seen as spanwise direction 130, which runs orthogonal to the so-called chordwise direction 132 as indicated in figure 2.

In the rotor blade root area 114 a rotor blade root end 126 with a flange connection 128 is provided, by means of which the rotor blade 110 can be mechanically connected to a pitch bearing or an extender.

Figure 3 exemplarily shows a half shell 134 of a wind turbine rotor blade 110. The half shell 134 represents a fiber composite component in the context of this writing.

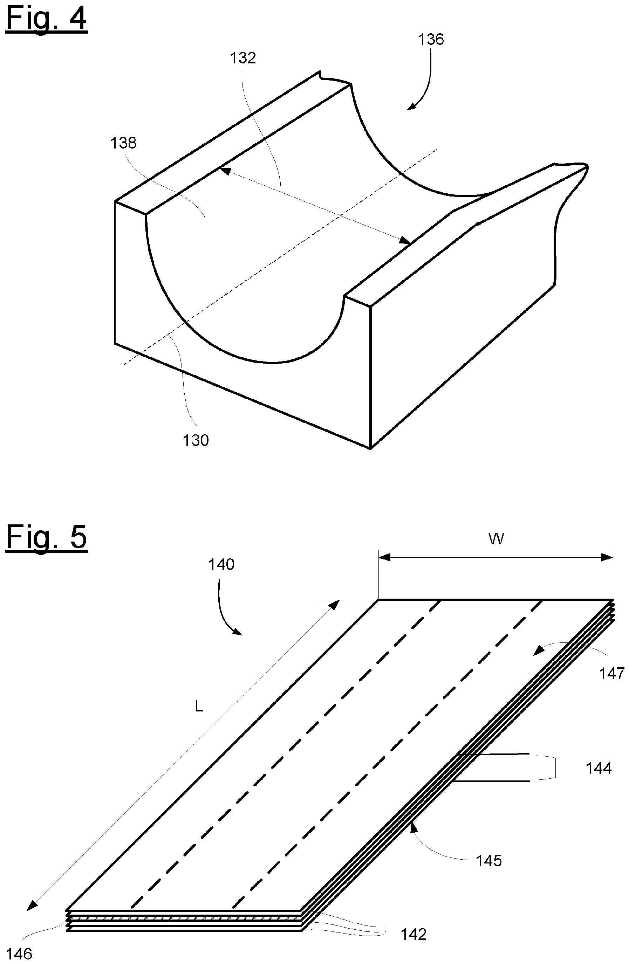

The half shell 134 is formed by laying a plurality of reinforcing material such as fabric layers, e.g. glass fiber fabrics, onto a mould surface 138 of a respective mould 136, as exemplarily shown in figure 4 (only a root portion of the mould is illustrated). As can be seen in figure 4, the mould 132 is a curved mould, meaning that the mould surface 138 is at least partially curved. Later, the fabric layers are infused with resin and cured to form the final, stable half shell 134. Further, in figures 3 and 4 the spanwise direction 130 and chordwise direction 132 are indicated.

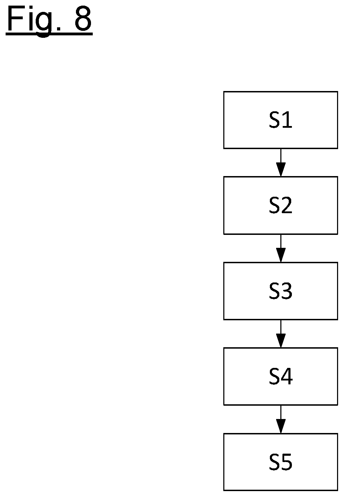

For manufacturing a fiber composite component like the half shell 130 above, preforms of stacked fabric layers can be used, which are described in the following under referral to figures 5 to 8.

Figure 5 shows a fiber preform 140 (short: preform 140) according to an embodiment of the invention. The preform 140 comprises several fabric layers 142, e.g. unidirectional fabric layers or the like as described above. The fabric layers 142 are glass fiber fabrics comprising one or more mats of dry glass fibers, in particular in the form of rovings. The fabric layers 142 are arranged on top of each other to form a stack 144. The fabric layers 142 are stitched or sewn together to hold together. The stack 144 has a bottom side 145 and a top side 147.

The preform 140, i.e. the stack 144 is essentially flat with only a little thickness corresponding to an amount of fabric layers and has a length L and a width W. The length L corresponds to the chordwise direction 132, and the width W corresponds to the spanwise direction 130. In other words, the preform 140 will be laid into the mould such that the length L runs parallel to the chordwise direction 132.

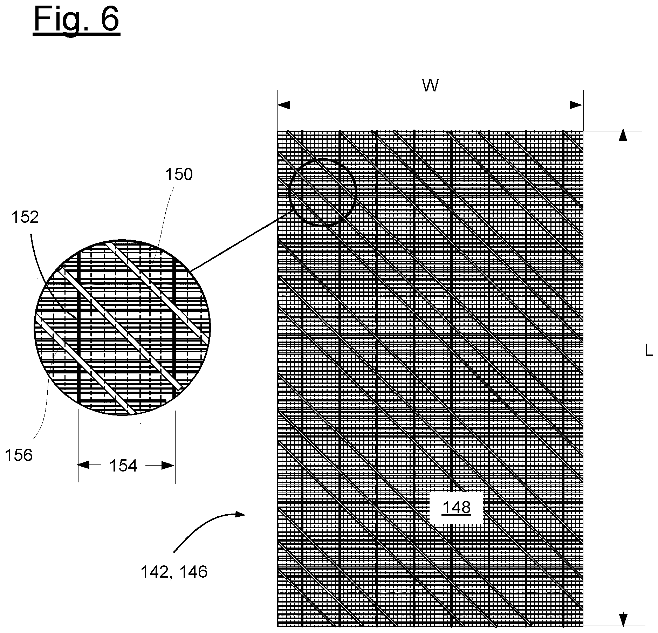

At least one of the fabric layers 142 is formed as a stiffening layer 146, as will be described along with figure 6. The stiffening layer 146 is sandwiched between at least two other fabric layers 142 (as indicated in figure 5). The stiffening layer 146 can also be arranged at the bottom side 145 or the top side 147, i.e. form a bottom layer or a top layer of the stack 144. The stiffening layer 146 comprises a fabric 148 as described above, e.g. a standard fabric comprising a unidirectional layer of dry fibers 150 (e.g. rovings), which run at an angle of 0° (with respect to the lengthwise direction of the rotor blade) parallel to the width in the present example. Of course, other fabrics as described above can be used. Additionally, the stiffening layer 146 comprises stiffening rods 152. The stiffening rods 152 are arranged essentially parallel to the length L, i.e. in chordwise direction of the rotor blade, when the preform 140 is placed in the mould 136. The stiffening rods 152 are made from pultruded rovings, have an essentially round cross-section and a thickness around 1,5 mm. The stiffening rods 152 are arranged in parallel at a distance 154 of around 50 mm between two adjacent rods 152.

The stiffening rods 152 are an integral part of the respective fabric 148. The stiffening rods 152 are woven to the fabric 148 by dry retaining fiber rovings 156, which are be from the same material as the dry fibers 150. The dry retaining fiber rovings 156 run along a direction which is different from the already existing fiber directions. In the present example, the dry retaining fiber rovings 156 run at an angle of 45 ° with respect to the dry fibers 150 and to the stiffening rods 152. Thus, the stiffening rods 152 are firmly held to the fabric 148 by the dry retaining fiber rovings 156, wherein all components of the stiffening layer 146 are connected by stitching or sewing lines running parallel to the stiffening rods 152.

The stiffening rods 152 provide stiffness to the stiffening layer 146. The stiffening layer 146 is stiffer than the remaining fabric layers 142 and thus the remaining parts of the preform 140.

The stiffening rods 152 are part of the stiffening layers 146. They remain in the rotor blade during vacuum infusion and curing of the laminate.

The preform 140 as described above can now be laid into the respective mould 136, wherein the stiffening layer 146 prevents the preform 140 and thus the fabric layers from buckling and the like, in particular in regions of the curved mould surface 138 in the root region. The described preform 140 enables the functions and advantages as mentioned in the introductory portion.

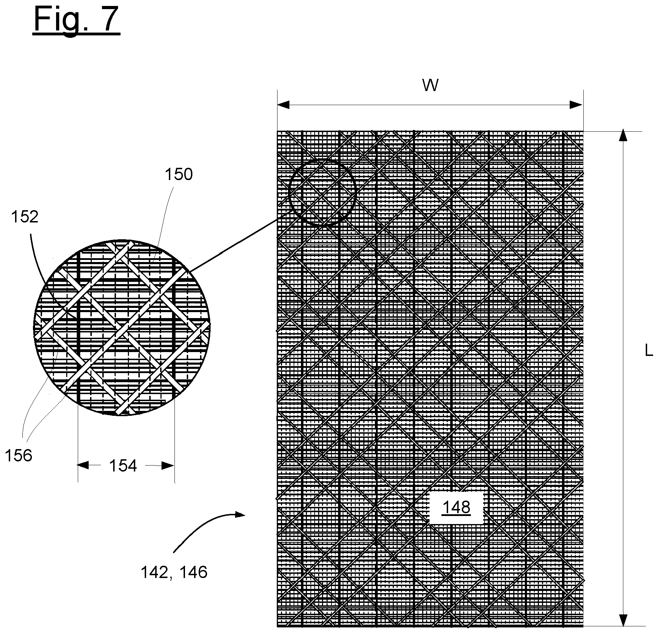

Figure 7 refers to another embodiment according to the invention and shows, similar to figure 6, at least one of the fabric layers 142 being formed as a stiffening layer 146. Thus, the above applies analogously, if not stated otherwise below. According to the embodiment of figure 7, the stiffening rods 152 are an integral part of the respective fabric 148. The stiffening rods 152 are woven to the fabric 148 by dry retaining fiber rovings 156, which are from the same material as the dry fibers 150. The dry retaining fiber rovings 156 run along a direction which is different from the already existing fiber directions. In the present example, the dry retaining fiber rovings 156 run at an angle of +/-45° with respect to the dry fibers 150 and to the stiffening rods 152. In comparison with the embodiment shown in figure 6, the retaining fiber rovings 156 are running in two directions. Thus, the stiffening rods 152 have an even stronger hold to the fabric 148 by the dry retaining fiber rovings 156, wherein all components of the stiffening layer 146 are connected by stitching or sewing lines running parallel to the stiffening rods 152.

In following, an embodiment of a method for manufacturing a fiber composite component like the half shell 130 of the wind turbine rotor blade 110 is disclosed, thereby using the preform 140.

In a step S1, the mold 136 with its curved mould surface 138 is provided.

In a next step S2, the preform 140 is provided.

In a next step S3, the preform 140 is laid into the mould 136 onto the curved mould surface 138, wherein - due to the stiffening layer of the preform 140 - the preform 140 is self-supporting so that the preform 140 does not buckle in the laid state.

In a next step S4, the preform 140 is infused with resin.

In a next step S5, the resin is cured, e.g. by providing heat to the components in the mould 136. Thus, the fiber composite component, e.g. the half shell 130, is manufactured.

We note that of course a multitude of preforms 140 might be needed to manufacture a blade half shell 130. Furthermore, we note that the preforms 140 can vary in size, shape, dimensions and/or number of stiffening rods 152, depending on the fiber composite component, the part in the mould 136 where the respective preforms 140 are laid into etc. We note, that for manufacturing the fiber composite component like the half shell 130 also other fabric layers or stacked fabric layers can be used in addition to the preforms 140 as described.

In the context of this disclosure, the term essentially means that minor variations, for example up to 5%, are tolerable in the particular context.

### REFERENCE SIGNS

- 100: wind turbine
- 102: tower
- 104: foundation
- 106: nacelle
- 108: rotor
- 110: rotor blade
- 112: rotor hub
- 114: rotor blade root region
- 116: transition region
- 118: profile region
- 120: longitudinal direction
- 122: pressure side
- 124: suction side
- 126: rotor blade root end
- 128: flange connection
- 130: spanwise direction
- 132: chordwise direction
- 134: half shell
- 136: mould
- 138: mould surface
- 140: fiber preform
- 142: fabric layer
- 144: stack
- 145: bottom side
- 146: stiffening layer
- 147: top side
- 148: fabric
- 150: dry fibers
- 152: stiffening rod
- 154: distance
- 156: dry retaining fiber rovings
- L: length
- W: width
- Sn: step

## Claims

1. A fiber preform (140) for manufacturing a fiber composite component of a wind turbine rotor blade (110), wherein
- the preform (140) comprises a plurality of fabric layers (142), the fabric layers (142) being arranged on top of each other to form a stack (144),
- each fabric layer (142) comprises dry fiber material,
- at least one layer of the plurality of fabric layers (142) is formed as a stiffening layer (146),
- the stiffening layer (146) comprises several stiffening rods (152), and
- the stiffening rods (152) are held on the stiffening layer (146) via several dry retaining fiber rovings (156).

2. Fiber preform (140) according to claim 1, wherein stiffening rods (152) are woven with the stiffening layer (146) .

3. Fiber preform (140) according to claim 2, wherein the dry retaining fiber rovings (156) run inclined with respect to the stiffening rods (152).

4. Fiber preform (140) according to any one of the preceding claims, wherein each stiffening rod (152) has a thickness of 1,5 mm or less.

5. Fiber preform (140) according to any one of the preceding claims, wherein the stiffening layer (146) is arranged at the bottom side (145) and/or top side of the stack (147).

6. Fiber preform (140) according to any one of the preceding claims, wherein the stiffening layer (146) is arranged between two fabric layers (142) of the plurality of fabric layers (142).

7. Fiber preform (140) according to any one of the preceding claims, wherein the fiber preform (140) has a length (L) corresponding to chordwise direction (132) and a width (W) corresponding to a spanwise direction (130), and wherein the stiffening rods (152) run along the chordwise direction (132) .

8. Fiber preform (140) according to any one of the preceding claims, wherein two adjacent stiffening rods (152) are arranged in parallel to each other, in particular are spaced apart from each other by 40 to 60 mm, preferably 50 mm.

9. Fiber preform (140) according to any one of the preceding claims, wherein the stiffening rods (152) are an integral part of the stiffening layer (146).

10. Fiber preform (140) according to any one of the preceding claims, wherein each stiffening rod (152) is a pultruded roving.

11. Fiber preform (140) according to any one of the preceding claims, wherein the plurality of fabric layers (142) are fixedly connected to each other, e.g. by sewing or stitching.

12. Method of manufacturing a fiber composite component of a wind turbine rotor blade (110), comprising the steps
- providing a mould (136) with a curved mould surface (138),
- providing a fiber preform (140) according to any one of the preceding claims,
- laying the preform (140) into the mould (136) onto the curved mould surface (138), wherein - due to the stiffening layer (146) of the preform (140) - the preform (140) is self-supporting so that the preform (140) does not buckle in the laid state, and
- resin infusing of the preform (140) and curing the resin to manufacture the fiber composite component of the wind turbine rotor blade (110).

13. Wind turbine rotor blade comprising a half shell (130), the half shell (130) comprising at least one fiber preform (140) according to any one of the claims 1 to 11.
